# FASCICULE DE BREVET EUROPEEN

(11) **EP 1 215 118 B1**
(45) Date de publication et mention de la délivrance du brevet: **27.07.2005**
(21) Numéro de dépôt: 00870305.0
(22) Date de dépôt: 18.12.2000
(51) Int. Cl.: B64F 5/00, B64F 1/26

(54) **Banc d'essai pour inverseur de poussée**
Prüfstand für Schubumkehr
Test bench for thrust reverser

(43) Date de publication de la demande: 19.06.2002
(73) Titulaire: Techspace Aero S.A., 4041 Herstal (BE)
(72) Inventeur: Guillet, Gérard, 4683 Vivegnis (BE); Jacob, Pierre-Manuel, 4500 Huy (BE)
(74) Mandataire: Van Malderen, Joelle

(56) Documents cités:
- FR-A- 2 671 179
- MEHALIC C M, LOTTIG R A: "Full-scale Thrust Reverser Testing in an Altitude Facility"" AIAA PAPER, no. 87-1788, 1987, pages 1-13, XP001004710

## Description

### Objet de l'invention

Le domaine d'application concerné par cette invention est celui de l'aviation et de l'aéronautique.

La présente invention se rapporte à un dispositif permettant de tester le bon fonctionnement d'un inverseur de poussée présent sur un moteur de type turboréacteur, ledit test étant réalisé au sol sur un banc d'essai intérieur ou extérieur.

### Etat de la technique

Jusqu'au début des années 1940, le mode de propulsion classique des avions civils ou militaires était le moteur à pistons qui actionnait une ou plusieurs hélices et permettait de faire avancer les avions par la rotation d'hélices(s) rejetant l'air vers l'arrière des avions. Puis sont apparus les premiers turboréacteurs dits «turboréacteurs à simple flux» qui utilisent un autre mode de propulsion : la propulsion par réaction.

Un turboréacteur à simple flux est constitué d'une enceinte carénée qui aspire et comprime l'air de l'extérieur. Une réaction de combustion a lieu dans une chambre de combustion entre l'air chauffé et le combustible. Les gaz brûlés passent dans une turbine à laquelle ils cèdent une partie de leur énergie, qui sera utilisée pour l'étage compresseur. Ensuite les gaz brûlés sont éjectés vers l'arrière où ils se détendent à grande vitesse dans une tuyère, exerçant sur les parois de cette tuyère une poussée qui assure la propulsion de l'avion par réaction.

Certains avions civils ou militaires utilisent aujourd'hui comme moyen de propulsion un turbofan, encore appelé « turboréacteur à double flux ». Les avions ainsi équipés sont moins bruyants et consomment moins d'énergie que les avions équipés de turboréacteurs à simple flux. Dans ce type de réacteurs, une partie de l'air aspiré n'est pas chauffé et ne subit qu'une faible compression avant d'être directement rejeté dans la tuyère.

Afin qu'ils puissent freiner, les avions civils à réaction sont équipés d'un dispositif particulier monté sur le turboréacteur et appelé « inverseur de poussée ». L'inverseur de poussée est un dispositif se présentant sous la forme d'un déflecteur qui permet de dévier dans le sens contraire à la poussée c'est-à-dire vers l'avant du réacteur tout ou partie des gaz et ainsi d'obtenir, comme son nom l'indique, une inversion de la poussée.

Il existe deux principaux types d'inverseurs de poussée : les inverseurs à coquilles et les inverseurs à grilles ou à persiennes. Les inverseurs à coquilles sont constitués par des demi-coquilles qui viennent se placer directement dans le flux des gaz, et en particulier de l'air, et dévient le flux latéralement. Les inverseurs à grilles ou à persiennes sont quant à eux principalement utilisés pour dévier le flux froid des turbofans. Des exemples d'inverseurs de poussée sont donnés dans les documents EP-B1-0 043 764, EP-B1-0 067 747, FR-A-2 559 838 et EP-B1-0 310 497.

Il est impératif de pouvoir tester le bon fonctionnement de ces inverseurs de poussée afin de vérifier leurs caractéristiques et leur comportement du point de vue tant mécanique qu'aérodynamique. En effet, ces inverseurs de poussée constituent une pièce critique de l'avion, leur dysfonctionnement en vol ayant déjà été plusieurs fois à l'origine de crashs. Le problème est que les tests actuellement réalisés sur le fonctionnement des inverseurs de poussée présentent eux-mêmes des risques, dans la mesure où ils doivent être effectués soit en vol, soit au sol dans des bancs d'essai extérieurs. Les bancs d'essai intérieurs au sol généralement utilisés pour tester les autres pièces de l'avion ne peuvent pas en effet l'être dans ce cas particulier, puisque la circulation du flux de gaz imposé par le banc d'essai et celle de l'inverseur de poussée se font en sens opposé, ce qui entraînerait une détérioration à la fois des pièces du banc et de l'inverseur à tester, ainsi qu'une réinjection, par le moteur à l'essai, de gaz brûlés, ce qui peut provoquer un décrochage de ce moteur avec risque de dégâts à celui-ci.

Pourtant à l'heure actuelle, aucune solution qui permettrait de résoudre ce problème de test des inverseurs de poussée n'a encore été proposée.
La publication de Charles M. Mehalic et Roy A. Lottig (NASA), intitulée *"Full-Scale Thrust Reverser Testing in an Altitude Facility"*, *AIAA Paper, No. 87-1788, 1987, pages 1-13, XP001004710* décrit un système de collecte inverseur de gaz brûlés pour tester un inverseur de poussée sous différentes conditions de vol. Le système de collecte inverseur est capable de capter les gaz d'échappement secondaires issus de l'inverseur et de les transporter jusqu'au système de collecte des gaz d'échappement primaires. Il est précisé que ce système de collecte inverseur comprend deux conduits de section rectangulaire, une structure support pour ces conduits et un adaptateur de section conique capable de s'adapter au collecteur de gaz d'échappement primaires.

### Buts de l'invention

La présente invention vise à résoudre ce problème de tester au sol des inverseurs de poussée dans un banc d'essai intérieur ou un banc d'essai extérieur.

La présente invention vise plus précisément à fournir une solution simple à utiliser et de coût modéré.

La présente invention vise également à fournir une solution qui soit fiable et offre le maximum de sécurité.

La présente invention vise en outre à fournir une solution pouvant également être utilisée dans le cas d'un essai sans inverseur de poussée.

### Résumé de l'invention

La présente invention se rapporte à un banc d'essai destiné à tester le fonctionnement d'un inverseur de poussée d'un moteur, de préférence un turboréacteur muni dudit inverseur de poussée, ledit moteur étant capable d'aspirer et d'évacuer l'air dans un certain sens selon un flux primaire et ledit inverseur de poussée étant capable de faire circuler les gaz issus de la combustion entre l'air et au moins un combustible selon un flux secondaire, dirigé dans un sens essentiellement opposé audit flux primaire, ledit banc étant caractérisé en ce qu'il est pourvu de moyens de collecte et de récupération desdits gaz issus de l'inverseur de poussée, lesdits moyens étant capables de rediriger les gaz sortant de cet inverseur de poussée dans le sens dudit flux primaire.

Selon l'invention, lesdits moyens de collecte et de récupération des gaz, qui sont capables de rediriger les gaz sortant de l'inverseur de poussée dans le sens dudit flux primaire, comprennent au moins un déflecteur et deux demi-coquilles, de préférence métalliques, en vis-à-vis et ouvertes au moins sur une face extérieure, chaque demi-coquille étant divisée en compartiments séparés par des parois essentiellement parallèles de façon à permettre un écoulement laminaire du flux de gaz.

De préférence, lesdits moyens de collecte et de récupération des gaz sont en outre pourvus de moyens d'attache à l'inverseur de poussée et/ou au moteur.

Un autre objet de la présente invention est l'utilisation de ce banc d'essai comme banc d'essai intérieur pour tester au sol le fonctionnement d'un inverseur de poussée.

Enfin, la présente invention se rapporte aussi à l'utilisation de banc d'essai comme banc d'essai extérieur pour tester au sol le fonctionnement d'un inverseur de poussée.

### Brève description des figures

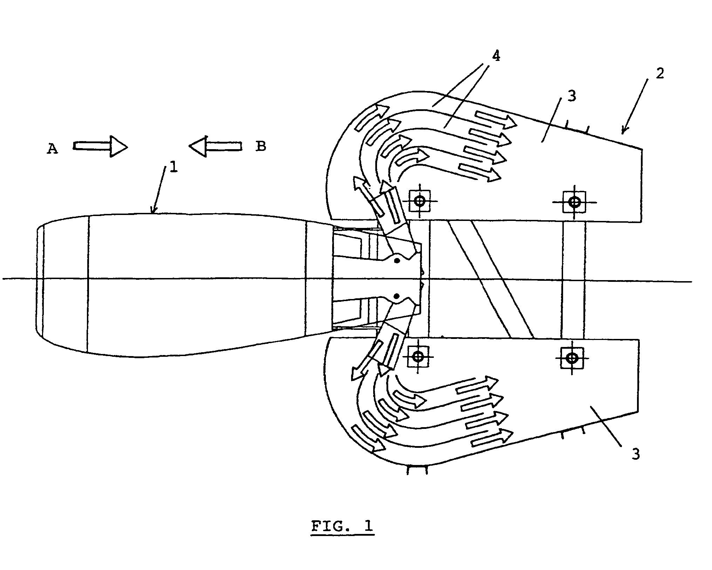

La figure 1 représente une vue montrant le positionnement du collecteur de flux à la sortie de l'inverseur de poussée d'un turboréacteur dans le banc d'essai intérieur selon l'invention.

### Description d'une forme d'exécution préférée de l'invention

Un exemple d'inverseur de poussée à tester dans un banc d'essai intérieur selon la présente invention est illustré par la figure 1. Le moteur du turboréacteur étant capable d'aspirer et d'évacuer l'air dans un certain sens selon un flux primaire schématisé par la flèche A, cet inverseur de poussée à tester 1 est capable de faire circuler les gaz brûlés, issus de la combustion entre l'air et au moins un combustible, selon un flux secondaire dirigé dans un sens essentiellement opposé audit flux primaire et schématisé par la flèche B. A la sortie de l'inverseur de poussée sont disposés des moyens 2 de collecte et de récupération de l'air issu de l'inverseur de poussée. Ces moyens 2 comprennent deux demi-coquilles 3, par exemple métalliques, disposées en vis-à-vis et ouvertes sur une face. Ces demi-coquilles 3 sont pourvues d'au moins un déflecteur 4. L'air issu de l'inverseur de poussée est ainsi récupéré à l'intérieur des demi-coquilles 3 et redirigé dans le sens dudit flux primaire, comme le montre les flèches C. Chaque demi-coquille 3 est divisée en compartiments séparés les uns des autres par des parois essentiellement parallèles de façon à permettre un écoulement laminaire du flux de gaz. En outre, les déflecteurs 4 positionnés à l'intérieur des demi-coquilles 3 permettent une répartition rationnelle de la veine fluide au niveau des moyens de collecte 2.

## Revendications

1. Banc d'essai destiné à tester le fonctionnement d'un inverseur de poussée (1) d'un moteur, de préférence un turboréacteur muni dudit inverseur de poussée (1), ledit moteur étant capable d'aspirer et d'évacuer l'air dans un certain sens selon un flux primaire (A) et ledit inverseur de poussée (1) étant capable de faire circuler les gaz issus de la combustion entre l'air et au moins un combustible selon un flux secondaire (B), dirigé dans un sens essentiellement opposé audit flux primaire (A), ledit banc étant pourvu de moyens (2) de collecte et de récupération desdits gaz (B) issus de l'inverseur de poussée (1), lesdits moyens (2) étant capables de rediriger les gaz sortant (B) de cet inverseur de poussée (1) dans le sens dudit flux primaire (A), **caractérisé en ce que** lesdits moyens (2) de collecte et de récupération des gaz comprennent deux demi-coquilles (3), de préférence métalliques, positionnées en vis-à-vis, ouvertes au moins sur une face extérieure et divisées chacune en compartiments séparés par des parois (4) essentiellement parallèles de façon à permettre un écoulement laminaire du flux de gaz.

2. Banc d'essai selon la revendication 1, **caractérisé en ce que** lesdits moyens (2) de collecte et de récupération des gaz sont en outre pourvus de moyens d'attache à l'inverseur de poussée (1) et/ou au moteur.

3. Utilisation du banc d'essai selon la revendication 1 ou 2, comme banc d'essai intérieur pour tester au sol le fonctionnement d'un inverseur de poussée.

4. Utilisation du dispositif selon la revendication 1 ou 2, comme banc d'essai extérieur pour tester au sol le fonctionnement d'un inverseur de poussée.

## Patentansprüche

1. Prüfstand für die Prüfung des Betriebs eines Schubumkehrers (1) eines Motors - vorzugsweise eines Turbostrahltriebwerks -, der mit dem besagten Schubumkehrer ausgestattet ist, wobei der besagte Motor die Luft in eine bestimmte Richtung gemäß einem Hauptstrom (A) ansaugen und abführen kann und der besagte Schubumkehrer (1) die aus der Verbrennung der Luft und mindestens einem Brennstoff entstehenden Gase gemäß einem Nebenstrom (B) leiten kann, der in die entgegengesetzte Richtung des Hauptstroms (A) verläuft; der besagte Prüfstand ist mit Mitteln (2) ausgestattet, die die Sammlung und die Rückgewinnung der besagten Gase (B) ermöglichen, die aus dem Schubumkehrer (1) stammen, wobei die besagten Mittel (2) für die Sammlung und die Rückgewinnung der Gase zwei muschelförmige Teile (3) aufweisen, vorzugsweise aus Metall, die sich gegenüber stehen, mindestens auf einer Seite offen sind und jeweils durch Trennwände (4) in Räume unterteilt sind; die Trennwände sind hauptsächlich parallel angeordnet, so dass eine laminare Strömung des Gasstroms ermöglicht wird.

2. Prüfstand gemäß Anspruch 1, **dadurch gekennzeichnet, dass** die besagten Mittel (2) für die Sammlung und die Rückgewinnung der Gase u.a. mit Vorrichtungen ausgestattet sind, die es ermöglichen, sie an dem Schubumkehrer (1) und/oder am Motor zu befestigen.

3. Anwendung des Prüfstands gemäß Anspruch 1 oder 2 als Innenprüfstand, um am Boden den Betrieb eines Schubumkehrers zu prüfen.

4. Anwendung des Prüfstands gemäß Anspruch 1 oder 2 als Außenprüfstand, um am Boden den Betrieb eines Schubumkehrers zu prüfen.

## Claims

1. Test bed intended to test the functioning of the thrust reverser (1) of an engine, preferably a turbojet, provided with said thrust reverser (1), said engine being able to draw in and expel the air in a specific direction according to a primary flow (A), and said thrust reverser (1) being able to circulate the gases derived from the combustion between the air and at least one fuel according to a secondary flow (B), directed in a direction substantially opposite to that of said primary flow (A), said bed being provided with means (2) for collecting and recovering said gases (B) derived from the thrust reverser (1), said means being able to redirect the gases (B) exiting this thrust reverser (1) in the direction of said primary flow (A), **characterised in that** said collection and recovery means (2) for the gases comprise two half-shells (3), preferably made of metal, facing each other, open at least on one external face and each divided into compartments separated by walls (4) that are substantially parallel so as to allow a laminar flow of the gas flow.

2. Test bed according to Claim 1, **characterised in that** said collection and recovery means (2) for the gases are also provided with fixing means to the thrust reverser (1) and/or to the engine.

3. Use of the test bed according to Claim 1 or 2 as an internal test bed for ground-testing the functioning of a thrust reverser.

4. Use of the device according to Claim 1 or 2 as an external test bed for ground-testing the functioning of a thrust reverser.
